# EUROPÄISCHE PATENTSCHRIFT

(11) **EP 0 953 084 B1**
(45) Veröffentlichungstag und Bekanntmachung des Hinweises auf die Patenterteilung: **23.07.2003**
(21) Anmeldenummer: 98907823.3
(22) Anmeldetag: 20.01.1998
(51) Int. Cl.: E04B 1/35, G05B 19/4097

(54) **BAUVERFAHREN**
CONSTRUCTION METHOD
PROCEDE DE CONSTRUCTION

(30) Priorität: 20.01.1997 DE 19701726
(43) Veröffentlichungstag der Anmeldung: 03.11.1999
(73) Patentinhaber: Hovestadt, Volkmar, 76131 Karlsruhe (DE); Hovestadt, Ludger, 76139 Karlsruhe (DE)
(72) Erfinder: Hovestadt, Volkmar, 76131 Karlsruhe (DE); Hovestadt, Ludger, 76139 Karlsruhe (DE)
(74) Vertreter: Pietruk, Claus Peter, Dipl.-Phys.
(86) Internationale Anmeldenummer: DE9800154
(87) Internationale Veröffentlichungsnummer: WO98031885

(56) Entgegenhaltungen:
- CH-A- 620 486
- DE-A- 2 809 135
- US-A- 4 847 778
- US-A- 5 227 983
- US-A- 5 587 914

## Beschreibung

Die vorliegende Erfindung befasst sich mit dem Bau von Gebäuden, insbesondere mit einem Bauverfahren nach Anspruch 1 und Gebäudebauelementen.

Produkte jedweder Art werden heute allgemein eher in Serie als individuell gefertigt. Dabei werden verstärkt computergestützte Methoden verwendet. So ist der Einsatz eines CAD/CAM-Systems für die Mechanikkonstruktion im Betriebsmittelbau bekannt, vergl. etwa Siemens-Albis-Berichte 38 (1986). Weiter ist eine Vorgehensweise zur montagegerechten Produktgestaltung aus "Robotersysteme 3, 37-45 (1987)" bekannt. Wie ein flächiger Grundbaustoff maschinell gefaltet bzw. gebogen werden kann, ohne daß das hierfür verwendete Werkzeug der Umlegung von Bauelement-Teilen im Wege steht, wird in der US PS 5,587,914 beschrieben. Die Anordnungen von Falzlinien ist von Wellpappkartons per se bekannt, vergl. etwa DE 1 95 43 579 A1.

Im Bereich des Gebäudebaus werden Fertighäuser konzipiert, die weitgehend industriell vorgefertigt werden, wobei die Produktionsstätte zentral angeordnet ist und die einzelnen Teile des zu erstellenden Fertighauses über weite Strecken an die Baustelle transportiert werden. Der Transportweg erfordert einen großen logistischen Aufwand und ist störanfällig, weil individuelle einzelne Baukomponenten durch Transportschäden ausfallen können, was die Arbeit auf der Baustelle insgesamt verzögert. Fertighäuser werden auch nur für vergleichsweise kleine Häuser verwendet. Erschwerend tritt die stark unterschiedlich Nutzung von Gebäuden, die unterschiedlichen geographischen Gegebenheiten des Baugrundes usw. hinzu. Eine vollständige Vorfertigung eines kompletten Hauses in einer zentralen Produktionsstätte ist daher praktisch nicht möglich.

Weiter werden bestimmte Bauelemente wie Installationssysteme für Sanitäreinrichtungen baukastenartig vorgefertigt. Ein Beispiel zeigt die DE OS 2809135. Auch bei der Verwendung von Systembauteilen für Installationen entstehen aber Bautoleranzen, die eine Montage erschweren. Insbesondere ist es bei derartigen Systemen ohne weiteres möglich, daß von einem ausführenden Handwerker vor Ort die zu einer Installation führenden Leitungen ganz anderes geführt werden als beabsichtigt.

Es sind auch schon verschiedene Systeme zum Bau und/oder zur Planung von Gebäuden oder Teilen davon vorgeschlagen worden, vgl. zum Beispiel US PS 5227983 oder der US PS 4847778.

In herkömmlich erstellten Bauten, die als Unikate geplant und errichtet werden und in welchen die Montage, also der Roh- oder Mauerbau, die Verlegung von elektrischen Leitungen, Installationen, Lüftungsanlagen usw. handwerklich erfolgen, ist aufgrund dieser improvisierten Leitungsverlegung bislang keine detaillierte Planung von Versorgungseinrichtungen möglich bzw. sinnvoll. In großen Gebäuden, wie Hochhäusern mit Großraumbüros oder dergl. kann es so vorkommen, daß Leitungen mehrere Meter neben der allerdings nur grob vorgegebenen Lage zu finden sind. So sind dicht nebeneinander angeordnete Leitungen wie Warm- und Kaltwasser oder Heizungszu- und -ableitungen leicht zu verwechseln. Deshalb muß für Zwecke der Hausbewirtschaftung das Gebäude trotz Definition durch die Baupläne nach Bau vermessen werden, was die Erstellungskosten erhöht. Auch kann der tatsächliche Materialverbrauch an elektrischen Leitungen usw. nur schwer vorhergesagt werden, was einer Kostenkalkulation und Bauüberwachung abträglich ist.

Die Aufgabe der vorliegenden Erfindung besteht darin, Neues für die gewerbliche Anwendung bereitzustellen und insbesondere, jedoch nicht ausschließlich, für als Unikate gebaute Gebäude ein vorhersagbares Bauergebnis bei verringertem Zeit- und Kostenaufwand zu ermöglichen.

Das Ziel der vorliegenden Erfindung wird durch die unabhängigen Ansprüche gelöst, wobei bevorzugte Ausführungsformen in den abhängigen Ansprüchen angegeben sind.

Ein Grundgedanke der Erfindung besteht somit darin, selbst bei einem Unikat-Gebäude die Planung auch bezüglich der Versorgungseinrichtungen wie Klima- und Lüftungsanlagen, Elektreleitungen, Anordnung von Steckdosen und Schaltern, Sanitärinstallationen usw. nicht nur in etwa vorzugeben und es dann dem beauftragten Handwerker bei der Ausführung zu überlassen, wo er die Leitungen tatsächlich verlegt, sondern vielmehr erst eine genaue Planung auch hinsichtlich dieser Elemente durchzuführen und dann die Ausführung dieser Planung durch die Bereitstellung von nach dem exakten Plan vorbereiteten Bauteilen zur definierten Aufnahme der Mehrzahl-Versorgungseinrichtungen zu erzwingen.

Obwohl die Montage von Hand erfolgt, ist so sichergestellt, daß nur noch geringe Toleranzen auftreten werden. Anders als im Stand der Technik, wo durch unvorhergesehene und unbeabsichtigte Bauvorgänge gerade an den Übergängen zwischen verschiedenen Systemen Fehler und Abweichungen von Plänen auftreten, wird das Bauergebnis mit der vorliegenden Erfindung eindeutig vorhersagbar. Dies wird erreicht, indem Planung und Montage, d.h. die eigentliche Ausführung des Baus, durch die Vorfertigung von Bauteilen exakt nach Plan für ausgesuchte Bereiche, enger als bislang üblich miteinander verknüpft werden.

Die Planung erfolgt dabei derart präzise, daß, zumindest in wesentlichen Bereichen, wie Versorgungsschächten usw., die Lage der einzelnen Leitungen, Verbindungsstücke, Schalter usw. eindeutig ist. Dies ist mit dem Einsatz von CAD/CAM-Systemen ohne weiteres möglich, wobei sogar nach entsprechender Implementierung von Planungsvorschriften ergonomische Gesichtspunkte oder Erfordernisse des Schallschutzes und der Wärmedämmung automatisch beachtet werden können. Ausgehend von diesen detaillierten Plänen, in denen etwa für die Versorgungsleitungen Trassen definiert sind, längs welcher die einzelnen Leitungen parallel ohne wechselseitige Störung verlaufen, können für ausgesuchte Bereiche Bauteile zur definierten Festlegung der jeweiligen Versorgungseinrichtung planmäßig vorbereitet werden.

Erfindungsgemäß ist es dabei nicht erforderlich, wie bei Fertighäusern das Gebäude vollständig vorzufertigen; vielmehr ist es ausreichend, wenn lediglich für kritische Bereiche planmäßig Ausgangsbauteile vorbereitet werden, so daß die im Rohbau vorzusehenden Versorgungseinrichtungen exakt in die richtige relative Lage gebracht werden. Die handwerkliche Montage der einzelnen Versorgungseinrichtungen ist dabei erleichtert und weniger anfällig gegen Fehler: Wenn beim Ausbau des Rohbaus zunächst in den ausgesuchten Bereichen die planmäßig vorbereiteten Ausgangsbauteile eingebaut werden, können danach die Versorgungseinrichtungen in bzw. an den hierfür vorbereiteten Ausgangsbauteilen befestigt werden. Die Versorgungseinrichtungen können hierzu sogar partiell in einer Werkstatt vorbereitet werden, so daß vor Ort weniger Werkzeug benötigt wird. Dem Handwerker wird zugleich eine Tätigkeit auch während Schlechtwetterphasen unabhängig vom Ausbaugrad des Rohbaus in seiner Werkstatt ermöglicht. So ist beispielsweise möglich, elektrische Versorgungsleitungen von einem zentralen Sicherungskasten zu verschiedenen Stockwerken eines Gebäudes, die sich durch einen zentralen Versorgungsschacht erstrekken, nach Art eines aus dem Automobilbau bekannten Kabelbaumes vorzufertigen; dieser muß nur noch in die planmäßig vorbereiteten Bauteile eingelegt und dann entsprechend angeschlossen werden; gleichfalls können etwa im Sanitärbereich Rohrleitungen usw. einschließlich aller Krümmer und dergleichen vorbereitet werden. Dies reduziert die zur Montage erforderliche Zeit. Dank der exakten erfindungsgemäßen Planung ist nicht zu befürchten, daß sich verschiedene Versorgungseinrichtungen stören.

Die für ausgesuchte Bereiche zur definierten Aufnahme planmäßig vorbereiteten Ausgangsbauteile gewährleisten dabei stets, daß allenfalls noch vernachlässigbar geringe Toleranzen auftreten werden. Wenn nicht der gesamte Rohbau vorgefertigt ist, wird zwar nicht die absolute Lage von Versorgunseinrichtungen im Gebäude millimetergenau bestimmt sein, aber dennoch deren relative Lage zueinander hochexakt sein. Zugleich ist es dank moderner Vermessungsmethoden möglich, den eigentlichen Rohbau hinreichend so präzise zu erstellen, daß die absolute Lage noch befriedigend genau festliegt.

Die Verwendung planmäßig vorbereiteter Bauteile macht das Bauergebnis vorhersagbarer und genauer, und erleichtert zugleich eine spätere Demontage und das Recycling der verwendeten Systeme. Genauso ist es ohne weiteres möglich ist, ein vorhandenes System ohne größeren Aufwand aufgrund der vorhandenen Pläne und ohne das Erfordernis, den tatsächlichen Bau zu vermessen, nachzurüsten. Dazu kann das Bauteil ebenfalls wie erforderlich vorbereitet werden. In der Summe führt die Erfindung so zu deutlichen Zeit-, Kosten- und Qualitätsgewinnen.

Auch wenn für die unikatbezogene Vorfertigung Teilbereiche wesentlich präziser als für normale architektonische Planung üblich geplant werden müssen, was womöglich eine längere Planungsdauer erfordert, wird dieser Mehraufwand so mehr als ausgeglichen.

Es ist bevorzugt, die Ausgangsbauteile durch Bearbeitung von Baustoffen in Standardformaten zu erstellen. Die Verwendung von Standardformaten verbilligt den Bau weiter. Wenn örtlich verfügbare Baustoffe für die Ausgangsbauteile verwendet und diese lokal vorbereitet werden, d.h. am Ort der Baustelle oder nur wenig davon entfernt, entfällt der Transport über weite Strecken, was den logistischen Aufwand verringert, Kosten senkt und zudem bei Beschädigung eines vorbereiteten Bauelementes eine schnellere Nachlieferung aufgrund der kürzeren Anfahrtszeiten, falls überhaupt, gewährleistet.

Es ist bevorzugt, möglichst viele Versorgungseinrichtungen bei der Planung zu erfassen und insbesondere unterschiedliche Versorgungseinrichtungen zu berücksichtigen, so daß bei der Montage dieser Versorgungseinrichtungen keine wechselseitige Behinderung auftritt.

Die planmäßige Vorbereitung des Bauteiles umfaßt bevorzugt, daß die Aufnahmeöffnungen, Löcher und Bohrungen usw. für die Versorgungseinrichtungen an dem geplanten Ort des Bauteiles vorgesehen werden; das Bauteil stellt somit quasi einen Plan im Maßstab 1 : 1 für die Anordnung der Versorgungseinrichtungen dar.

Es ist bevorzugt, das Ausgangsbauteil soweit wie möglich vorzubereiten und zudem auch Montageanweisungen auf dem Bauteil, etwa die Position im Rohbau oder dem nachträglich auszubauenden Haus aufzubringen. Dies vermeidet Verwechslungen, wenn mit einer Vielzahl vorbereiteter Ausgangsbauteile auf der Baustelle umgegangen wird. Bevorzugt erfolgt die planmäßige Vorbereitung dabei dezentral, insbesondere direkt am Ort der Baustelle, so daß die Ausgangsbauteile praktisch auf Anfrage planmäßig vorbereitet werden.

Bevorzugt wird als Baumaterial für die Ausgangsbauteile ein flächiger Grundstoff wie Blech verwendet. Dieser kann zur planmäßigen Vorbereitung geschnitten, gestanzt, gebohrt, mit Falzlinien versehen und/oder gebogen werden wie erforderlich. Das Blech kann beschichtet werden, etwa elektrostatisch mit Kunststoff-Pulver. Dies erhöht die Korrosionsbeständigkeit, verbessert die Griffigkeit und verringert die Verletzungsgefahr an scharfen Kanten. Farbige Beschichtungen können zudem den Verwendungszweck oder dergl. codieren.

Falls dies nicht lokal an der Baustelle erfolgt, sondern lokal in einem blechverarbeitenden Betrieb bzw. einem von mehreren hierfür geeigneten Bearbeitungszentren, hat der so hergestellte Leichtbaustein nur ein geringes Transportvolumen, wenn er flach oder noch stapelbar aufgebogen zur Baustelle gebracht wird und dort z.B. von Hand in seine Endform gebracht wird.

Bei Montage an korrosionsanfälligen Plätzen, z.B. Naßzellen, oder wenn die Bauelemente integral mit einer nach Fertigstellung sichtbaren Abdeckung gebildet werden, finden vorteilhaft Bleche aus Edelstahl und/oder mit Beschichtung Verwendung.

Bei der Planung können ergonomische Gesichtspunkte bezüglich Größe, Installierbarkeit sowie gewünschte oder gesetzlich geforderte Dämmaßnahmen automatisch berücksichtigt werden. Eine konfliktfreie Montage der einzelnen Versorgungseinrichtungen wird besonders dadurch ermöglicht, daß zur Integration und Koordination Trassen im Rohbau definiert werden, innerhalb derer die Versorgungseinrichtungen verlaufen. Trassen stellen für die Versorgunseinrichtungen reservierte Volumina in Korridor-Form dar. Bevorzugt werden auch vollautomatisch als Grundlage für die Ausschreibung und zur Montagevorbereitung Stücklisten erstellt.

Ausgangsbauteile werden bevorzugt für Bereiche vorbereitet, in welchen unterschiedliche Versorgungseinrichtungen dicht beieinander angeordnet sind. Dabei ist z.B. ein Trassenverlauf nur an wenigen Stellen längs einer geraden, langen Strecke definiert und/oder sind an Stellen Bauteile vorgesehen, wo die Trasse in eine andere Richtung umgelenkt werden soll. Weiter werden bevorzugt Bauteile für Punkte vorgesehen, wo ein Übergang zwischen erfindungsgemäß geplantem Versorgungseinrichtungsverlauf und konventionell verbauter Versorgungseinrichtung vorgesehen wird; dies ermöglicht, an unkritischen Stellen den Planungsaufwand zu verringern, ohne das Planungsergebnis zu verschlechtern.

Es ist möglich, die Bauteile bereits im Rohbau insbesondere als verlorene Schalung einzubringen. Dies erspart eine nachträgliche Montage und verbilligt den Bau weiter.

Es ist möglich, daß die Bauteile zur definierten Aufnahme der Mehrzahl an Versorgungseinrichtungen an der Baustelle planmäßig vorbereitet werden. Dazu kann ein mobiles Bearbeitungszentrum für den Gebäudebau verwendet werden. Dieses wird dann an die Baustelle verbracht und relevante Gebäudedaten werden etwa mit Disketten oder direkt über eine Datenleitung aus dem Planungsbüro übertragen. Im Bearbeitungszentrum ist eine numerisch gesteuerte Maschine vorhanden, welche die Ausgangsbauteile entsprechend den Anforderungen bearbeitet. Für flächige Materialien wie Bleche, Holz, Fliesen, Dämmplatten, Verbundplatten, usw. wird die numerisch gesteuerte Maschine bevorzugt mit einem Wasserschneidkopf versehen. Damit sind auch dreidimensionale Strukturen bis zu einer Tiefe von z.B. 15 cm in Leichtbeton erzeugbar.

Das erfindungsgemäß vorgefertigte Gebäudebauelement zur definierten Aufnahme der Mehrzahl an Versorgungseinrichtungen ist vorzugsweise selbsttragend, so daß es nach der Montage nicht gestützt werden muß, sondern sogar ohne weiteres die Last der Versorgungseinrichtungen tragen kann, also beispielsweise alle eingebauten Installationskomponenten wie Rohrleitungen, Schellen, Spülkästen usw. Hingegen kann vorgesehen werden, daß angebaute Komponenten wie Waschtische und dergleichen auf zusätzlichen Konsolen befestigt werden, so daß eine Auslegung der vorgefertigten Bauelemente für sehr hohe Lasten nicht zwingend ist. Ein erstes Bauelement nach der Erfindung besteht aus einem flächigen Grundbaustoff wie Blech, der mit entsprechenden Schneid-, Stanz- oder Biegelinien bzw. Öffnungen versehen ist; ein anderes Bauelement besteht aus Leichtbeton.

Es versteht sich, daß es nicht zwingend erforderlich ist, in einem Gebäude lediglich selbsttragend vorgefertigte Bauelemente eines Typus zu verwenden, sondern daß unterschiedliche Typen wie erforderlich kombiniert werden können.

Obgleich jedes vorgefertigte Teil an sich ein Unikat ist, versteht sich, daß für ein Bauwerk, etwa eine Reihenhausreihe, oder auf an sich identischen Stockwerken eines Hochhaus wiederkehrend durchaus wiederholt die gleichen Vorfertigungen erstellt werden können.

Die Erfindung wird im folgenden nur beispielsweise an Hand der Zeichnung beschrieben. In dieser zeigt:
- Fig. 1: den geplanten Verlauf von Versorgungseinrichtungen in einem Haus sowie die geplante Lage eines Fensters relativ hierzu;
- Fig. 2: die für die Anordnung der geplanten Versorgungseinrichtung erforderlichen, vorbereiteten GebäudeBauelemente in ihrer Lage relativ zu einander;
- Fig. 3: ein mobiles Bearbeitungszentrum zur Erzeugung planmäßig vorbereiteter Bauelemente aus Standard-Baustoffen;
- Fig. 4: die Anordnung der verlegten Rohrleitungen in den Standard-Bauteilen;
- Fig. 5: ein zweites Beispiel einer Mehrzahl für ein Gebäude geplanter Versorgungseinrichtungen;
- Fig. 6: einen Ausschnitt hieraus in größerer Ausführlichkeit;
- Fig. 7: ein flächiges Gebäudebauelement zur definierten Aufnahme einer Mehrzahl von Versorgungseinrichtungen;
- Fig. 8: das Bauelement von Fig. 7 in montagefertigem Zustand;
- Fig. 9: die erfindungsgemäßen Anordnungen von Versorgungseinrichtungen in durch hierfür planmäßig vorbereitete Bauelemente definierten Trassen;
- Fig. 10: eine Detailansicht von Fig. 9;
- Fig. 11 bis 13: das in Fig. 10 verwendete Bauelement in verschiedenen Stadien vor der Montage;
- Fig. 14 bis 15: ein weiteres Ausführungsbeispiel eines erfindungsgemäßen Bauelementes.

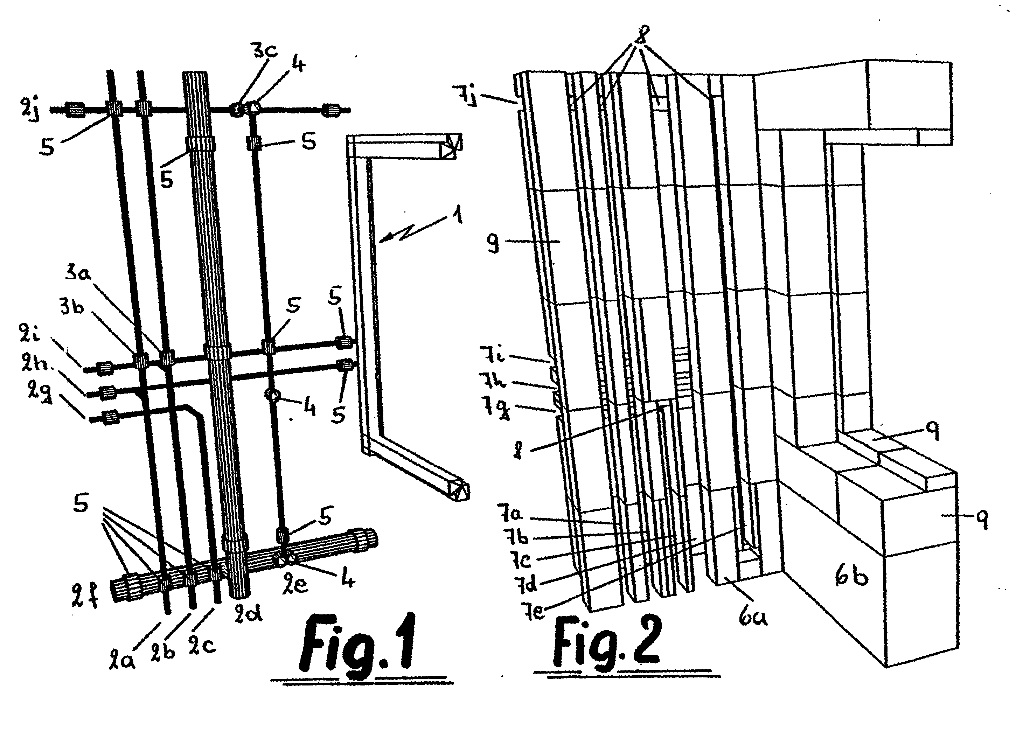

Nach Figur 1 sind in einem Plan 1 für ein Gebäude eine Mehrzahl an Versorgungseinrichtungen 2 vorgesehen, die hier als Leitungen 2a bis 2j dargestellt sind.

Nach Fig.1 können die Leitungen 2 in verschiedenen Ebenen laufen; beispielsweise laufen Leitungen 2a bis 2e in einer ersten Ebene, und die Leitungen 2f bis 2j in einer zweiten Ebene. Wie erforderlich können dabei Übergangsstücke 3 zwischen den Leitungen unterschiedlicher Ebenen vorgesehen werden. In den Leitungen können bei Ausbildung als Rohrleitungen etwa Ventile und bei Ausbildung als Stromleitungen Steckdosen und Schalter usw. wie bei 4 angedeutet vorgesehen werden und die Leitungen können mit Ummantelungen und/oder Befestigungsmitteln 5 versehen sein.

Übergangsstücke 3 und Ventile bzw. Steckdosen und Schalter 4 stellen für Zwecke der Erfindung ebenfalls Versorgungseinrichtungen dar. Weiter werden für das Gebäude Fenster, Türen, Treppen und dergleichen für die Zwecke der Beschreibung ebenfalls als Versorgungseinrichtungen aufgefaßt werden, da sie insbesondere Räume mit Licht bzw. Zugangsmöglichkeiten versorgen.

Figur 2 zeigt die Wände 6a, 6b, an bzw. in welchen die Versorgungseinrichtungen 2 von Figur 1 vorgesehen werden. Die geplanten Versorgungseinrichtungen einer Ebene, hier der durch die Leitungen 2a bis 2e definierten Ebene, laufen innerhalb eines Raumes; dazu sind Aussparungen 7a bis 7f vorgesehen. Die Leitungen der anderen Ebene sind vom angrenzendem Raum aus zugänglich, wie durch Aussparungen 7f bis 7j angedeutet. Die einzelnen Wände sind aus einer Vielzahl einzelner vorbereiteter Bauteile 9 erstellt, die Aussparungen 7 und Durchbohrungen 8 für die Versorgungseinrichtungen aufweisen. Die Bauelemente 9 bestehen aus Material, das lokal verfügbar ist. Dies kann insbesondere für Blöcke aus Leichtbeton der Fall sein, die gerade so groß sind, daß noch keine Armierung erforderlich ist.

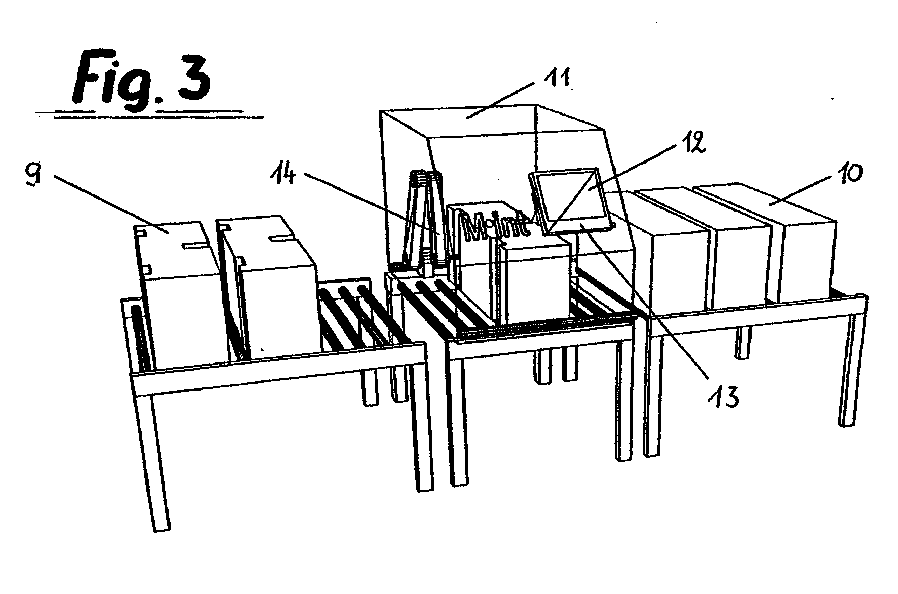

Zur Bearbeitung der Bauelemente 9 ist nach Figur 3 ein Bearbeitungszentrum mit einer CNC-Maschine 11 vorgesehen, welche eine Rechnereinheit 12 mit einer Dateineingabevorrichtung 13 zur Eingabe der geplanten Gebäudedaten umfaßt, sowie ein oder mehrere Bearbeitungselemente 14. Bevorzugt wird das Bearbeitungszentrum zur Bearbeitung der Ausgangsbauteile mobil sein und direkt am Ort der Baustelle eingesetzt.

Zum Bau eines Gebäudes wird zunächst das Gebäude einschließlich des detailliert festzulegenden Verlaufs der Versorgungseinrichtung 2 unter Berücksichtigung erforderlicher Dämmaßnahmen usw. geplant. Dann werden die geplanten Daten an die numerisch gesteuerte Vorbereitungsmaschine gespeist, die anhand der Daten Ausgangsbaustoffe 10 für die definierte Aufnahme der Versorgungseinrichtung 2 planmäßig vorbereitet. Die CNC-Maschine sieht dazu in den Ausgangsbauteilen, d.h. den Standard-Bauelementen, während der Bearbeitung die erforderlichen Bohrungen, Vertiefungen, Aussparungen usw. vor, so daß die notwendigen, zur definierten Aufnahme der Versorgungseinrichtungen planmäßig vorbereiteten Bauelemente nach der Bearbeitung als Bauelemente 9 erhalten werden.

Die so erhaltenen vorbereiteten Bauelemente 9 werden wie erforderlich verbaut.

Wenn bei der Montage, etwa durch Unachtsamkeit, ein einzelnes Bauelement 9 zerstört oder beschädigt wird, kann unverzüglich ein neues aufgrund der vorhandenen Gebäudedaten mit exakt gleichen Maßen erstellt werden.

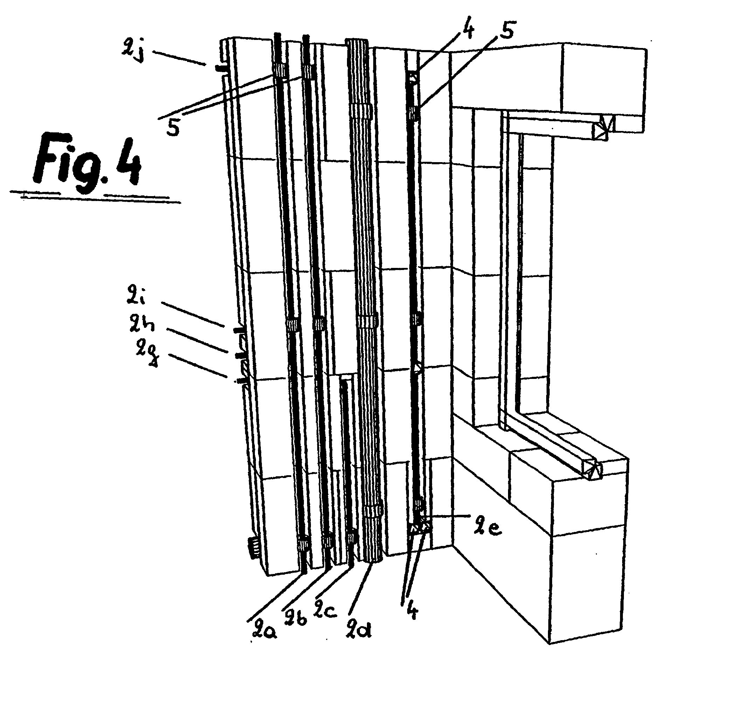

Nach dem Aufbau des Rohbaus unter Verwendung der planmäßig vorbereiteten Bauelemente 9 werden die Versorgungseinrichtungen 2 an den hierfür vorbereiteten Stellen eingesetzt, vergl. Figur 4.

Ein Gebäude, in welchem auf diese Weise die Versorgungseinrichtungen definiert verlegt sind, muß nach der Erstellung nicht erneut vermessen werden, um genaue Daten für die Dokumentation und die Gebäudebewirtschaftung bereitzustellen.

Falls gewünscht, wird der komplette Rohbau aus einerseits planmäßig vorbereiteten und andererseits nicht behandelten Standard-Bauelementen erstellt. Die erfindungsgemäß vorbereiteten Massivbausteine sind so mit Standard-Bausteinen verbaut. Andernfalls werden nur Teilbereiche so aufgebaut, während die übrigen Gebäudebereiche, insbesondere solche, in welche keine Versorgungseinrichtungen exakt zu verlegen sind, konventionell erstellt werden.

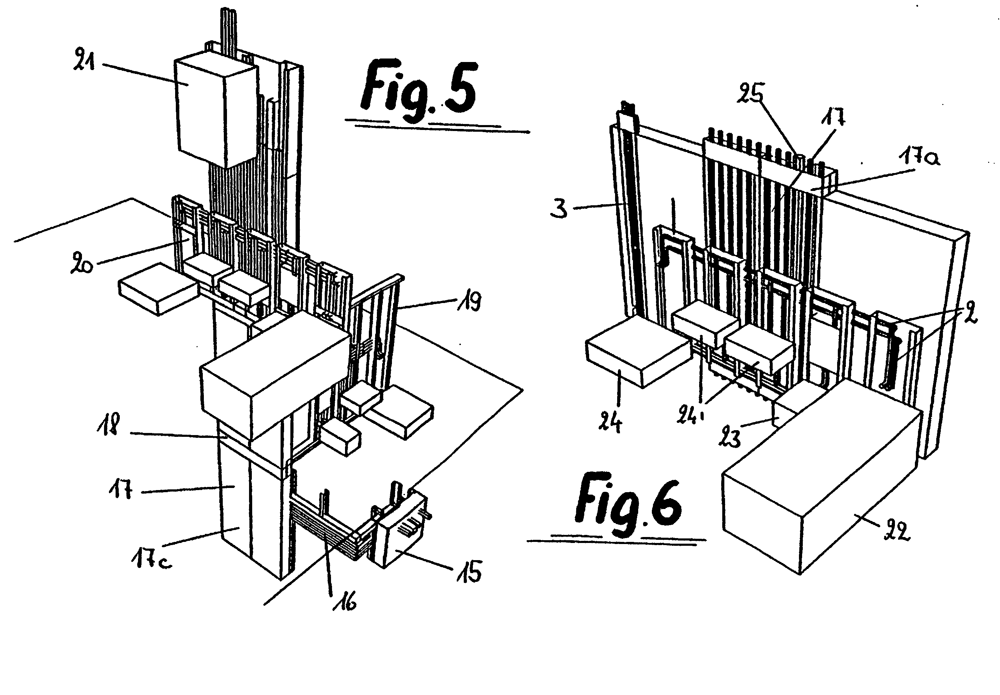

Figur 5 zeigt ein weiteres Beispiel, wie Bauelemente für ausgesuchte Bereiche zur definierten Aufnahme von Versorgungseinrichtungen planmäßig vorbereitet werden. Dabei werden aus flächigem Grundbaustoff hergestellte Leichtbausteine eingesetzt.

Nach Figur 5 sind beispielhaft der Hausanschluß 15, die Installationsführung 16 an Decke, Wand und Boden, der Installationsschacht 17 mit Kanälen und Abdeckungen, die als verlorene Schalung gebildete Aussparung an Decken und Wanddurchbrüchen 18, eine Installationswand 19, eine Vorwandinstallation 20, und einen Anschluß und eine Installationsführung der Heizungsund/oder Solaranlage 21 als Versorgungseinrichtung 2 im Dach mit durch eine Dachhaut zu führenden Leitungen durch planmäßig vorbereitete Ausgangsbauteile definiert.

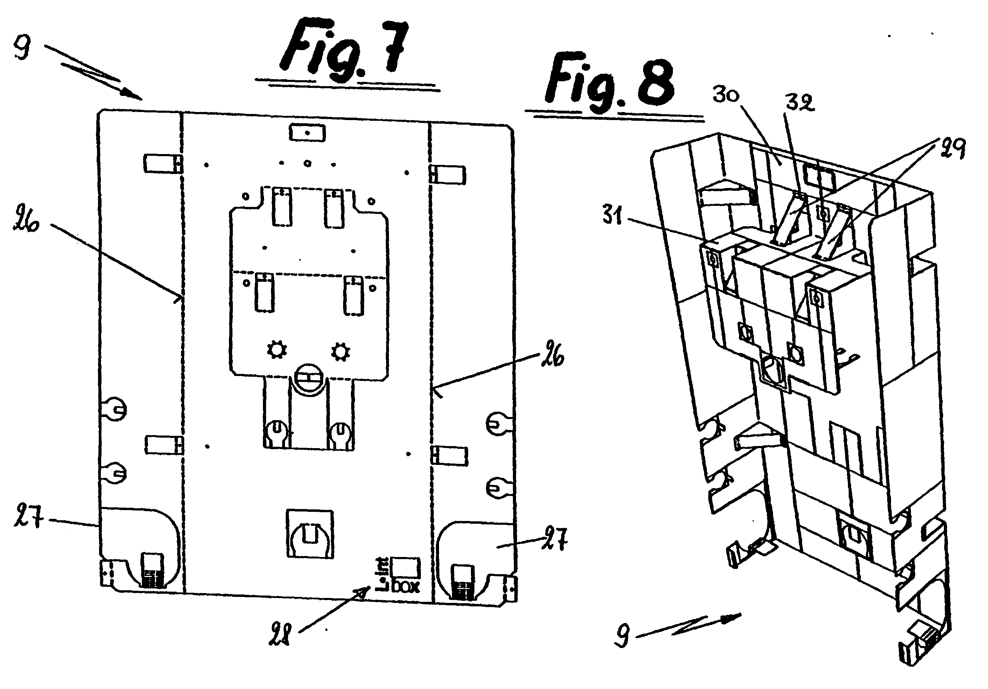

Figur 6 zeigt einen Ausschnitt aus Figur 5, in welchem an der Wand mit integriertem Schacht 17 und einer Vorwandinstallation 20 insbesondere eine Naßzelle mit einer Badewanne 22, einem WC 23, einer Duschwanne 24 und zwei Waschbecken 24' vorgesehen ist. Diese Versorgungseinrichtungen sind in ihrer Lage exakt vorgeplant und werden über Versorgungsleitungen 2 angeschlossen, die in ihrer Lage exakt durch planmäßig vorbereitete Bauelemente 9 festgelegt sind und zu jeweiligen Versorgungstrassen 25 in einem Installationsschacht 17 führen. Der Deckendurchbruch wird im Bereich des Installationsschachtes mit einem Bauelement 17a als verlorene Schalung koordiniert.

Die Bauelemente 9 sind aus einem flächigen Grundbaustoff, insbesondere Blech, vorzugsweise für den Naßbereich Edelstahlblech und/oder beschichtetem Blech gebildet.

Figur 7 zeigt ein Beispiel für ein Bauelement 9, das aus einem flächigen Grundbaustoff durch Vorsehen von Biegelinien 26 und Ausstanzöffnungen 27 gebildet ist; aus Gründen der Übersichtlichkeit sind dabei nicht alle Biegelinien und Ausstanzöffnungen nummeriert. Weiter ist eine Beschriftung 28 vorgesehen.

Zur Herstellung des Leicht-Bauelementes 9 werden Gebäudepläne mit einem CAD/CAM-System unter genauer Festlegung der Versorgungseinrichtungen einschließlicher aller erforderlicher Leitungen erstellt. Die den Installationsbereich betreffenden Gebäudedaten werden dann auf eine CNC-Maschine übertragen, welche das Blech in bekannter Weise stanzt, schneidet und beschriftet, wobei es alle erforderlichen Öffnungen, Bohrungen, Befestigungen, Beschriftungen und Biegekanten erhält. Dies geschieht bevorzugt direkt auf der Baustelle in einem mobilen Bearbeitungszentrum wie nach Fig. 3 oder in einem nahen, blechbearbeitenden Betrieb.

Das Bauteil kann maschinell in eine bevorzugt stapelbare Form gebogen oder noch flach an den Einbauort verbracht und dort von Hand aufgefaltet werden. Wenn zwischen einander winkelig zugeordneten Bereichen 30, 31 Verbindungslaschen 29 zur Abstrebung vorgesehen sind, welche an ihrer einen Seite durch eine Biegelinie mit dem Material einstückig gebildet sind, werden sie nach dem Auffalten gegenüberliegend fixiert, etwa durch Verzahnen, Vernieten, oder, wie bei 32 angedeutet, durch Verschrauben. Der fertige, selbsttragende Leichtbaustein, vgl. Fig. 8, ist so besonders stabil.

Er wird an der geplanten Stelle eingebaut und steht für die Aufnahme der Versorgungseinrichtungen bereit. Bei der Montage erzwingt der Leichtbausteine eine exakt definierte Lage der Versorgungseinrichtungen und sorgt so für die planmäßige Ausführung des Gebäudes bzw. des Innenausbaus.

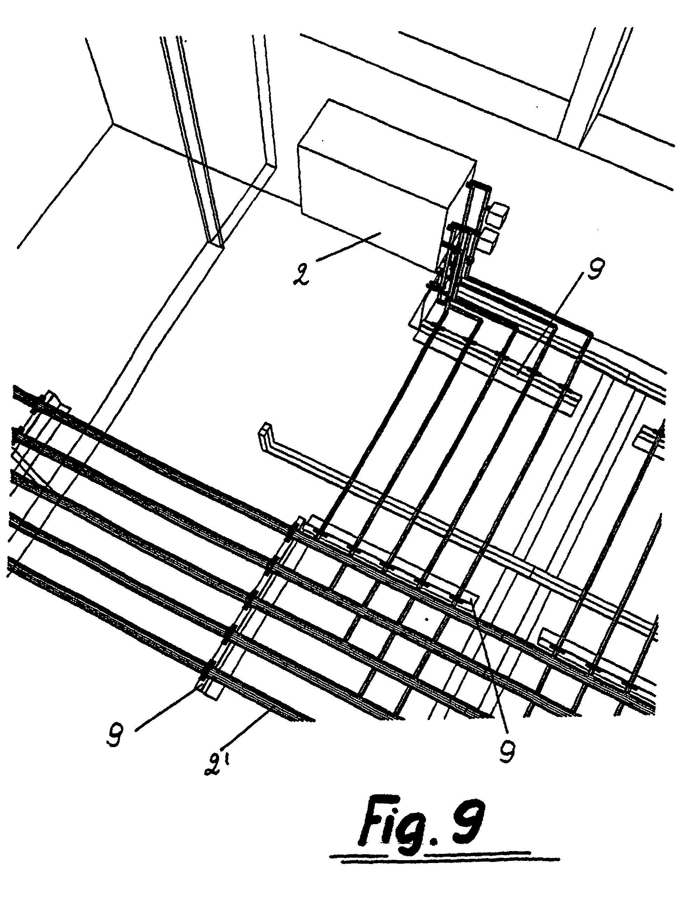

Figur 9 zeigt ein weiteres Ausführungsbeispiel, in welchem die koordinierte Leitungsführung von Versorgungsleitungen, d.h. Versorgungseinrichtungen der vorliegenden Erfindung, innerhalb eines Doppelbodens eines Bürogebäudes mit Hilfe von planmäßig vorbereiteten Bauteilen erreicht wird. Dabei dienen Ausgangsbauteile wiederum zur definierten Aufnahme der Mehrzahl an Versorgungseinrichtungen, wobei sie zugleich eine Montagehilfe darstellen. Diese Montagehilfe nimmt bevorzugt die Maßordnungen und die konstruktiven Rahmenbedingungen des Doppelbodens auf: Wie gezeigt, verlaufen innerhalb des Doppelbodens die Versorgungsleitungen 2' auf Trassen, die durch die hierfür vorgesehenen Bauteile 9 definiert sind.

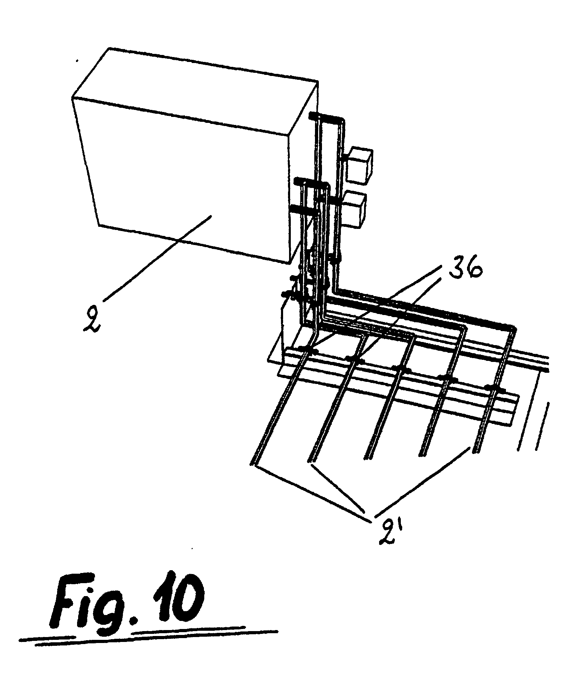

Figur 10 zeigt in näherer Ausführlichkeit die Anordnung eines erfindungsgemäßen Bauelementes 9 relativ zu den Leitungen 2 und einer Versorgungseinrichtung 2, bei welcher es sich beispielsweise um einen Konvektor handeln kann.

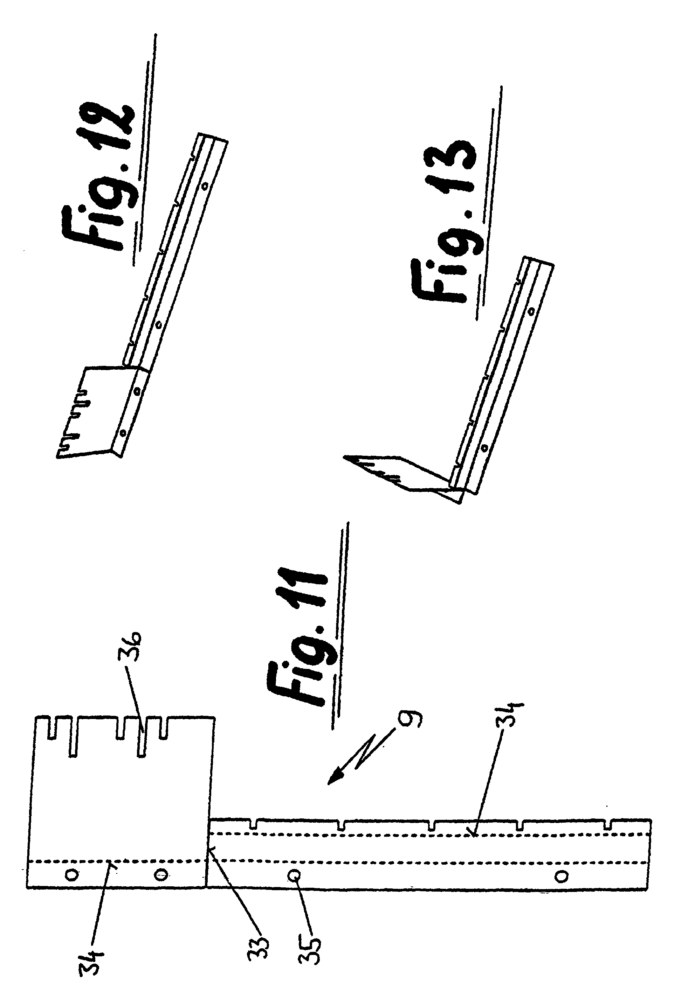

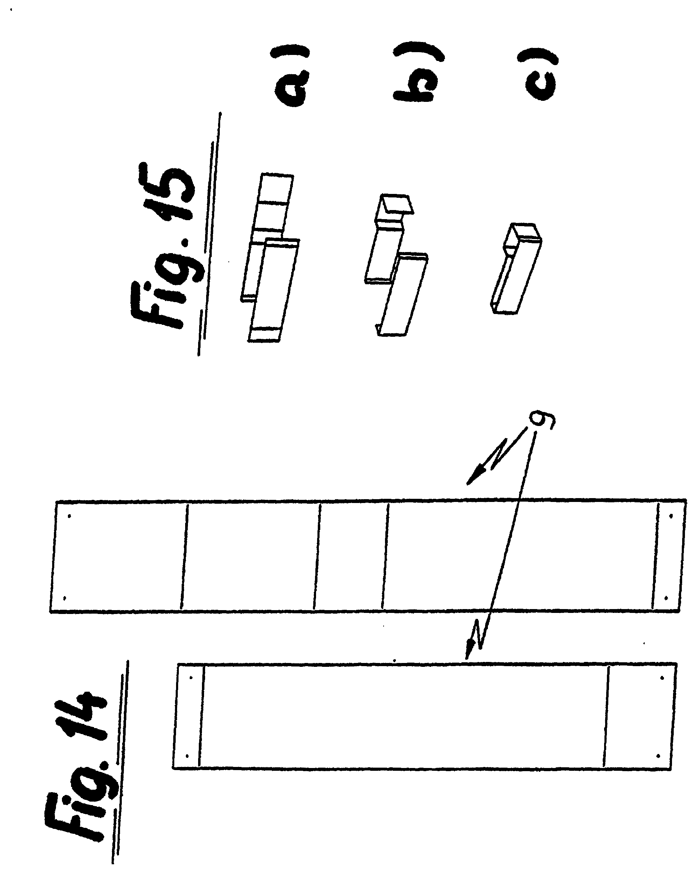

Nach Figur 11 wird das Bauelement 9 von Figur 10 in einem lokalen oder regionalen Bearbeitungszentrum aus Blech durch Schneiden und/oder Stanzen und Vorsehen von Biegelinien 33 und 34 sowie durch Bohrungen für die Befestigung 35 und Aussparungen 36 zur Aufnahme von herkömmlichen Installationsschellen oder dergleichen vorbereitet. Es wird entlang Biegelinie 34 maschinell in die in Fig. 12 gezeigte Form gebogen und zur Baustelle gebracht.

Am Ort der Baustelle wird es um Biegelinie 33 in seine dreidimensionale Form gebracht (Fig. 13) und an den vorgesehenen Befestigungspunkten angebracht. Vorzugsweise ist das Bauelement, das so zugleich eine dreidimensionale Umsetzung des Gebäudeplanes darstellt, so umfassend beschriftet (nicht dargestellt), daß der Monteur die gewünschte Position im Gebäude, etwa relativ zu einem Doppelbodenraster, ohne weiteres erkennt, was Fehlanordnungen sicher verhindert.

Nach der Installation des Bauelementes 9 können vorzugsweise in einer Werkstatt vorgefertigte Versorgungsleitungen 2, wie in Figur 10 gezeigt, mit Installationsschellen 36 oder dergleichen angebracht werden und eine Versorgungseinheit an den somit genau festliegenden Endpunkten der Versorgungsleitung 2 sofort und ohne große Anpassung montiert werden.

Fig. 14 und 15 a bis c zeigen ein Bauteil für eine verlorene Schalung, etwa den Deckendurchbruch 17a des Installationsschachtes 17 (Fig.6).

Die Erfindung wurde vorstehend nur beispielsweise beschrieben.

So sind unterschiedliche numerisch gesteuerte Bearbeitungsanlagen verwendbar, wie Fräsen und Wasserschneidanlagen; anstelle von Porenbetonsteinen ist für die Massivbausteine auch anderes Baumaterial verwendbar und die vorbereiteten Bauteile brauchen nicht erst nach Fertigstellung des Rohbaus eingesetzt werden.

Mit den planmäßig vorbereiteten Bauelementen können insbesondere verlorene Schalungen für koordinierte Decken- und Wanddurchbrüche wie bei Treppenaugen oder für Installationsschächte erzeugt werden.

Die für die Bauelemente 9 bei Ausbildung als Leichtbausteine verwendeten Bleche können bereits in einer Werkstatt in ihre dreidimensionale Form gefaltet werden.

obwohl vorteilhaft sämtliche Aussparungen usw. für Versorgungseinrichtungen in einem Bauteil vorgesehen werden, ist es möglich, an planmäßig vorbereiteten Ausgangsbauteilen noch weitere Versorgungseinrichtungen vorzusehen, etwa wenn eine Reihenhaussiedlung mit einheitlicher Grundausstattung erstellt wird und der Käufer eines einzelnes Haus nachträglich Sonderinstallationen wünscht. Auch können für zukünftige Ausrüstungen bereits entsprechende Aussparungen vorgesehen werden, um später etwa weitere Versorgungseinrichtungen wie zusätzliche Telefonleitungen, Antennenkabel, Abwasserleitungen usw. problemfrei installieren zu können, ohne daß bereits beim Bau Verlege-Kosten anfallen. Die Nachrüstung wird besonders dann vereinfacht, wenn an Installationsschächten Abdeckungen angebracht werden, wie Abdeckung 17c von Figur 5.

Weiter sind trotz detaillierter Planung Versorgungseinrichtungen teilweise noch konventionell verlegbar.

Die Erfindung ist für alle Arten von Gebäuden einsetzbar, wird aber bevorzugt für hochinstallierte Gebäude verwendet, in denen eine Vielzahl unterschiedlicher Versorgungseinrichtungen vorgesehen werden muß, wie für Bürohäuser, Schulen, Universitäten, Kliniken, Laboratorien und Reinsträume.

## Patentansprüche

1. Bauverfahren, worin ein Gebäude mit einer Mehrzahl unterschiedlicher Versorgungseinrichtungen aus wenigstens zwei der Gruppen Sanitärinstallationen, insbesondere Duschen, Waschbecken, WC's und Badewannen, Spülkästen und/oder
der Gruppe Heizung, insbesondere Solaranlagen, Heizkessel und/oder
der Gruppe Elektroinstallationen, insbesondere Schalter, Lampen, Steckdosen und/oder
der Gruppe Klima- und Lüftungsanlagen, einschließlich Lüftungsöffnungen und/oder Hausanschlüsse jeweils einschließlich der jeweiligen Leitungen
unter Codierung des Planes mit einer CAD/CAM-Anlage derart präzise geplant wird, daß zumindest in wesentlichen Bereichen die Lage der einzelnen unterschiedlichen Versorgungseinrichtungen eindeutig und koordiniert geplant vorgegeben ist, worin zumindest für ausgesuchte Bereiche durch die Bearbeitung von Baustoffen in Standardformaten unter Verwendung einer numerisch aufgrund der Codierung gesteuerten Maschine Gebäudeelemente vorbereitet werden,
worin die dergestalt planmäßig vorbereiteten Gebäudeelemente als Umsetzung des Planes im Maßstäb 1:1 in den Rohbau insbesondere als verlorene Schalung eingebaut werden und worin in diese so zur Aufnahme der Mehrzahl unterschiedlicher Versorgungseinrichtungen vorbereiteten Bauteile die Versorgungseinrichtungen in exakt erzwungener Lage eingesetzt werden.

2. Bauverfahren nach dem vorhergehenden Anspruch, **dadurch gekennzeichnet, dass** als ausgesuchte Bereiche des Gebäudes jene ausgesucht werden, in welchen unterschiedliche Versorgungseinrichtungen dicht beieinander angeordnet sind, wie Versorgungsschächte usw.

3. Bauverfahren nach einem der vorhergehenden Ansprüche, **dadurch gekennzeichnet, dass** die planmäßig vorbereiteten Gebäudeelemente nach Auffaltung und dergl. eingebaut werden.

4. Bauverfahren nach einem der vorhergehenden Ansprüche, **dadurch gekennzeichnet, dass** die Bearbeitung von Baustoffen unter Verwendung einer numerisch gesteuerten Maschine umfasst, dass zumindest ein Teil der notwendigen Öffnungen und/oder Befestigungspunkte für die Versorgungseinrichtungen am bzw. im als Ausgangsbauteil dienenden planmäßig vorbereiteten Gebäudeelement vorgesehen werden.

5. Bauverfahren nach dem vorhergehenden Anspruch, **dadurch gekennzeichnet, dass** alle der notwendigen Öffnungen am bzw. im Ausgangsbauteil vorgesehen werden.

6. Bauverfahren nach einem der Ansprüche 4 oder 5, **dadurch gekennzeichnet, dass** auch Montageanweisungen am bzw. im Ausgangsteil vorgesehen werden.

7. Bauverfahren nach einem der vorhergehenden Ansprüche, worin als Baustoff ein flächiger Grundstoff verwendet wird und die Bearbeitung umfasst, dass der flächige Grundstoff wie erforderlich geschnitten, gestanzt, gebohrt, mit Biegelinien versehen, gebogen und erforderlichenfalls beschichtet wird.

8. Bauverfahren nach dem vorhergehenden Anspruch, worin als flächiger Grundstoff Blech verwendet wird.

9. Bauverfahren nach einem der vorhergehenden Ansprüche, **dadurch gekennzeichnet, dass** Edelstahlblech als flächiger Grundstoff verwendet wird.

10. Bauverfahren nach einem der vorhergehenden Ansprüche, **dadurch gekennzeichnet, dass** der flächige Grundbaustoff flach oder maschinell zu einer noch stapelbaren Form gebogen zur Baustelle gebracht und dort in seine dreidimensionale End-Form gebogen bzw. gefaltet wird.

11. Bauverfahren nach dem vorhergehenden Anspruch, **dadurch gekennzeichnet, dass** der flächige Grundbaustoff von Hand gebogen bzw. gefaltet wird.

12. Bauverfahren nach einem der vorhergehenden Ansprüche, worin die Planung der Mehrzahl von Versorgungseinrichtungen umfasst, dass für mögliche und konfliktfreie Montage der einzelnen Versorgungseinrichtungen durch Integration und möglichst umfassende Koordination Trassen für die verschiedenen Versorgungseinrichtungen geplant werden.

13. Bauverfahren nach dem vorhergehenden Anspruch, **dadurch gekennzeichnet, dass** die Planung unter automatischer Berücksichtigung "ergonomischer Gesichtspunkte bezüglich Größe und/oder Installierbarkeit der Versorgungseinrichtungen, notwendiger Schallschutz, notwendige Wärmedämmmaßnahmen, Orientierung und Anpassung der Geometrie an Rohbaumaße und andere Ausbauteile durchgeführt wird.

14. Bauverfahren nach dem vorhergehenden Anspruch, **dadurch gekennzeichnet, dass** unter automatischer Berücksichtigung unter Anpassung der Geometrie an die Maße von wenigstens einem von Innenwänden, Doppelböden, Installationssystemen, Dämmmatten und/oder Rohrummantlungen erfolgt.

15. Bauverfahren nach einem der vorhergehenden Ansprüche, **dadurch gekennzeichnet, dass** die Planung mit für die Umsetzung in den Maßstab 1:1 hinreichender Genauigkeit geplant wird.

16. Bauverfahren nach dem vorhergehenden Anspruch, **dadurch gekennzeichnet, dass** Stücklisten erstellt werden.

17. Gebäudebauelement zur Ausführung eines Bauverfahrens nach einem der vorhergehenden Ansprüche, **dadurch gekennzeichnet, daß** es mit einer numerisch aufgrund der Codierung des Gebäudeplanes gesteuerten Maschine mit wenigstens einer Schneid-, Stanz- oder Biegelinie und/oder einer Öffnung aus einem flächigen Grundbaustoff, insbesondere vorzugsweise beschichtetem Blech, insbesondere Edelstahlblech, selbsttragend gebildet und vorzugsweise als verlorene Schalung und/oder mit entfernbarer Blechabdeckung einsetzbar ist.

18. Gebäudebauelement zur Ausführung eines Bauverfahrens nach einem der vorhergehenden Verfahrensansprüche, **dadurch gekennzeichnet, daß** es als unter Verwendung einer numerisch aufgrund der Codierung des Planes gesteuerten Maschine bearbeitetes Leichtbetonelement aus vorzugsweise armierungsfreiem Leichtbeton hergestellt ist.

19. Gebäudebauelement nach einem der beiden vorhergehenden Ansprüche, **dadurch gekennzeichnet, dass** es als verlorene Schalung eingesetzt wird.

20. Gebäudebauelement nach drei der vorhergehenden Ansprüche, **dadurch gekennzeichnet, dass** es mit entfernbarer Blechabdeckung eingesetzt wird.

21. Gebäudebauelement zur Ausführung eines Bauverfahrens nach einem der vorhergehenden Verfahrensansprüche, **dadurch gekennzeichnet, dass** es als unter Verwendung einer numerisch aufgrund der Codierung des Planes gesteuerten Maschine bearbeitetes Leichtbetonelement hergestellt ist.

22. Gebäudebeauelement nach dem vorhergehenden Anspruch, **dadurch gekennzeichnet, dass** es aus armierungsfreiem Leichtbeton hergestellt ist.

## Claims

1. Building method, wherein a building having a plurality of different service installations taken from at least two of the groups comprising sanitary installations, in particular showers, washbasins, WCs and bath tubs, cisterns and/or the group of electrical installations, in particular switches, lights, plugs and/or
the group of air conditioning and ventilation systems, including ventilation openings and house connection points each including the pipes/wires in question
is precisely planned with coding of the plan by a CAD/CAM system in such a way that at least in substantial areas the position of the individual different service installations is specified unambiguously in a coordinated plan, wherein at least for selected areas by machining building materials in standard formats using a machine which is numerically controlled on the basis of the coding building elements are prepared, wherein the building elements prepared according to plan in this way are installed in implementation of the plan on a scale of 1:1 into the building shell in particular in the form of permanent formwork and wherein the service installations are inserted in exactly constrained position into these structural parts prepared in this way for receiving the plurality of different service installations.

2. Building method according to the preceding claim, **characterised in that** for the selected areas of the building those are selected in which different servicing installations are arranged close together, such as service shafts, etc.

3. Building method according to one of the preceding claims, **characterised in that** the building elements prepared according to plan are installed after unfolding and the like.

4. Building method according to one of the preceding claims, **characterised in that** the machining of building materials using a numerically controlled machine comprises the provision of at least a portion of the necessary openings and/or fastening points for the service installations on or in the building element prepared according to plan serving as the starting structural part.

5. Building method according to the preceding claim, **characterised in that** all of the necessary openings are provided on or in the starting structural part.

6. Building method according to one of Claims 4 or 5, **characterised in that** assembly instructions are provided on or in the starting part.

7. Building method according to one of the preceding claims, wherein for the building material a sheet base material is used and the machining comprises that the sheet base material is cut, stamped, drilled, provided with fold lines, bent and if need be coated as required.

8. Building method according to the preceding claim, wherein sheet metal is used as the sheet base material.

9. Building method according to one of the preceding claims, **characterised in that** stainless steel sheet is used as the sheet base material.

10. Building method according to one of the preceding claims, **characterised in that** the sheet base building material is brought to the building site flat or bent by machine to a still stackable shape where it is bent or folded into its final three-dimensional shape.

11. Building method according to the preceding claim, **characterised in that** the sheet base building material is bent or folded by hand.

12. Building method according to one of the preceding claims, wherein the planning of the plurality of service installations comprises that for possible and conflict-free assembly of the individual service installations by integration and the most comprehensive coordination possible conduits are planned for the various service installations.

13. Building method according to the preceding claim, **characterised in that** the planning is carried out with automatic consideration being given to ergonomic aspects with regard to size and/or installability of the service installations, necessary sound insulation, necessary heat insulation measures, aligning and adapting the geometry to building shell dimensions and other parts in the completed building.

14. Building method according to the preceding claim, **characterised in that** under automatic consideration the geometry is adapted to the dimensions of at least one of the following: inside walls, false floors, installation systems, insulating mats and/or pipe insulation jackets.

15. Building method according to one of the preceding claims, **characterised in that** the planning is carried out with sufficient accuracy for conversion to the scale of 1:1.

16. Building method according to the preceding claim, **characterised in that** parts lists are drawn up.

17. Building element for carrying out a building method according to one of the preceding claims, **characterised in that** it is formed in self-supporting manner by a machine controlled numerically on the basis of the coding of the building plan having at least one cutting, stamping or bending line and/or an opening from a sheet base building material, in particular preferably coated sheet metal, in particular stainless steel sheet and is preferably employable as permanent formwork and/or with a removable sheet metal covering.

18. Building element for carrying out a building method according to one of the preceding method claims, **characterised in that** it is produced using a machine numerically controlled on the basis of the coding of the plan as a machined lightweight concrete element preferably from unreinforced lightweight concrete.

19. Building element according to one of the two preceding claims, **characterised in that** it is employed as permanent formwork.

20. Building element according to three of the preceding claims, **characterised in that** it is employed with a removable sheet metal covering.

21. Building element for carrying out a building method according to one of the preceding method claims, **characterised in that** it is produced using a machine controlled numerically on the basis of the coding of the plan as a lightweight concrete element.

22. Building element according to the preceding claim, **characterised in that** it is produced from unreinforced lightweight concrete.

## Revendications

1. Procédé de construction dans lequel un bâtiment est doté sur plans, par codage de ces derniers au moyen d'une installation de DAO/FAO, d'une pluralité de dispositifs d'alimentation différents provenant d'au moins deux des groupes cités ci-après : le groupe des installations sanitaires, notamment douches, lavabos, WC et baignoires, réservoirs de chasse d'eau, et/ou le groupe du chauffage, notamment installations solaires, chauffe-eau, et/ou le groupe des installations électriques, notamment interrupteurs, dispositifs d'éclairage, prises, et/ou le groupe de la climatisation et ventilation, y compris les bouches d'aération, et/ou branchements, y compris les tuyaux et les câbles de branchement correspondants, et ce avec une précision telle, qu'au moins dans les zones essentielles, la position des différents dispositifs d'alimentation soit clairement prédéfinie et planifiée, dans lequel, au moins dans des zones privilégiées, les matériaux de construction de format standard sont transformés en éléments conçus pour le bâtiment en utilisant une machine à commande numérique pilotée suivant le codage, selon lequel les éléments du bâtiment ainsi préparés conformément aux plans sont transposés à l'échelle 1:1 et intégrés dans le gros oeuvre notamment en tant que coffrage perdu, et dans lequel les dispositifs d'alimentation sont posés dans la position exacte dans les éléments de construction ainsi préparés pour recevoir la pluralité des dispositifs d'alimentation différents.

2. Procédé de construction selon la revendication précédente, **caractérisé en ce que** l'on désigne comme zones privilégiées du bâtiment celles dans lesquelles différents dispositifs d'alimentation sont étroitement regroupés, telles que les colonnes montantes etc.

3. Procédé de construction selon l'une des revendications précédentes, **caractérisé en ce que** les éléments du bâtiment préparés selon les plans sont intégrés après déploiement et analogue.

4. Procédé de construction selon l'une des revendications précédentes, **caractérisé en ce que** la transformation de matériaux de construction en utilisant une machine à commande numérique consiste à prévoir au moins une partie des ouvertures et/ou des points de fixation nécessaires pour les dispositifs d'alimentation sur ou dans l'élément du bâtiment préparé conformément aux plans et faisant office d'élément de construction de départ.

5. Procédé de construction selon la revendication précédente, **caractérisé en ce que** toutes les ouvertures nécessaires sont prévues sur ou dans l'élément de construction de départ.

6. Procédé de construction selon la revendication 4 ou 5, **caractérisé en ce que** des instructions de montage sont également prévues sur ou dans l'élément de départ.

7. Procédé de construction selon l'une des revendications précédentes, selon lequel on utilise en tant que matériau de construction un matériau de construction de base en nappe et la transformation consiste à le découper aux dimensions requises, à le découper à l'emporte-pièce, à le percer, à le doter de lignes de courbure élastique, à le cintrer et à l'enduire si nécessaire.

8. Procédé de construction selon la revendication précédente, selon lequel le matériau de base en nappe utilisé est de la tôle.

9. Procédé de construction selon l'une des revendications précédentes, **caractérisé en ce que** l'on utilise en tant que matériau de construction de base en nappe de la tôle d'acier inoxydable.

10. Procédé de construction selon l'une des revendications précédentes, **caractérisé en ce que** le matériau de construction de base en nappe est amené sur le chantier à plat ou plié machine sous une forme encore empilable, puis y est cintré ou plié pour lui donner sa forme définitive en trois dimensions.

11. Procédé de construction selon la revendication précédente, **caractérisé en ce que** le matériau de construction de base en nappe est cintré ou plié.

12. Procédé de construction selon l'une des revendications précédentes, dans lequel la planification de la pluralité des dispositifs d'alimentation suppose que l'on reporte sur les plans le tracé des différents dispositifs d'alimentation, pour permettre un montage aisé de chacun des dispositifs d'alimentation par intégration et coordination aussi complète que possible.

13. Procédé de construction selon la revendication précédente, **caractérisé en ce que** les plans sont réalisés en tenant automatiquement compte des "aspects ergonomiques" tels que la taille et/ou la capacité d'installer les dispositifs d'alimentation, la nécessaire insonorisation, les indispensables mesures d'isolation thermique, l'orientation et l'adaptation de la géométrie aux dimensions du gros oeuvre et à d'autres éléments du second oeuvre.

14. Procédé de construction selon la revendication précédente, **caractérisé en ce que** la prise en compte automatique s'effectue en adaptant la géométrie aux dimensions d'au moins l'un des éléments suivants : cloisons, faux-planchers, systèmes d'installation, nattes isolantes et/ou gaines isolantes pour tuyaux.

15. Procédé de construction selon l'une des revendications précédentes, **caractérisé en ce que** les plans sont établis avec suffisamment de précision pour permettre une transposition à l'échelle 1/1.

16. Procédé de construction selon la revendication précédente, **caractérisé en ce que** l'on dresse des listes de pièces.

17. Élément de bâtiment pour mettre en oeuvre un procédé de construction selon l'une des revendications précédentes, **caractérisé en ce qu'**il est réalisé de façon à être autoporteur, à l'aide d'une machine à commande numérique pilotée en fonction du codage du plan du bâtiment, et muni d'au moins une ligne de découpage, de découpage à l'emporte-pièce ou de cintrage et/ou d'une ouverture, à partir d'un matériau de construction de base en nappe, notamment de préférence de la tôle enduite, notamment de la tôle d'acier inoxydable, et **en ce qu'**il peut de préférence être mis en oeuvre ou logé en tant que coffrage perdu et/ou avec un recouvrement en tôle.

18. Élément de bâtiment pour mettre en oeuvre un procédé de construction selon l'une des revendications précédentes relatives au procédé, **caractérisé en ce qu'**il est fabriqué en tant qu'élément en béton léger de préférence non armé, et transformé par l'utilisation d'une machine à commande numérique pilotée en fonction du codage du plan.

19. Élément de bâtiment selon l'une des deux revendications précédentes, **caractérisé en ce qu'**il est mis en oeuvre ou logé en tant que coffrage perdu.

20. Élément de bâtiment selon trois des revendications précédentes, **caractérisé en ce qu'**il est mis en oeuvre ou logé avec un recouvrement en tôle amovible.

21. Élément de bâtiment pour mettre en oeuvre un procédé de construction selon l'une des revendications précédentes relatives au procédé, **caractérisé en ce qu'**il est fabriqué en tant qu'élément en béton léger transformé par l'utilisation d'une machine à commande numérique pilotée en fonction du codage du plan.

22. Élément de bâtiment selon la revendication précédente, **caractérisé en ce qu'**il est fabriqué en béton léger non armé.
